# EUROPEAN PATENT APPLICATION

(11) **EP 4 614 340 A1**
(43) Date of publication of application: **10.09.2025**
(21) Application number: 25161704.9
(22) Date of filing: 04.03.2025
(51) Int. Cl.: G06F 16/22

(54) **MAINTENANCE METHODS AND APPARATUSES FOR DATA DICTIONARY**

(30) Priority: 04.03.2024 CN 202410245829
(71) Applicant: Alipay (Hangzhou) Information Technology Co., Ltd., Hangzhou, Zhejiang 310000 (CN)
(72) Inventor: TAO, Wu, Hangzhou, Zhejiang, 310000 (CN)
(74) Representative: Fish & Richardson P.C.

(57) **Abstract**

One or more embodiments of this specification provide a maintenance method and apparatus for a data dictionary. The data dictionary maintains a key-value pair corresponding to a primary key included in a data record stored in a database; and a key of the key-value pair includes the primary key included in the data record, a value of the key-value pair includes a primary key ID obtained by mapping the primary key included in the data record, and the method includes: obtaining maintenance duration of the key-value pair; determining whether the maintenance duration reaches a predetermined duration threshold; and if yes, deleting the key-value pair, and writing the primary key ID into a list of IDs to be allocated.

## Description

### TECHNICAL FIELD

One or more embodiments of this specification relate to the data processing field, and in particular, to maintenance methods and apparatuses for a data dictionary.

### BACKGROUND

When data are stored in a database, a long primary key (PK) in a data record can be converted into a primary key identifier (ID) through dictionary mapping based on a data dictionary corresponding to the database, so as to reduce storage or provide faster search. Primary keys and corresponding primary key IDs of all data records can be maintained in the data dictionary. However, as data records increase, a quantity of stored primary key IDs increases constantly, and system crash is easily caused.

### SUMMARY

In view of this, one or more embodiments of this specification provide a maintenance method and apparatus for a data dictionary, so as to alleviate a problem in a related technology.

To achieve the above-mentioned objective, one or more embodiments of this specification provide the following technical solutions:
According to a first aspect of one or more embodiments of this specification, a maintenance method for a data dictionary is proposed, where the data dictionary maintains a key-value pair corresponding to a primary key included in a data record stored in a database; and a key of the key-value pair includes the primary key included in the data record, a value of the key-value pair includes a primary key ID obtained by mapping the primary key included in the data record, and the method includes: obtaining maintenance duration of the key-value pair; determining whether the maintenance duration reaches a predetermined duration threshold; and if yes, deleting the key-value pair, and writing the primary key ID into a list of IDs to be allocated.

Further, the value of the key-value pair further includes a timestamp used to indicate a latest use moment of the key-value pair; and the obtaining maintenance duration of the key-value pair includes: determining the maintenance duration of the key-value pair based on a difference between the latest use moment and a current moment.

Further, the value of the key-value pair is a value obtained by concatenating the primary key ID and the timestamp.

Further, the key-value pair is stored in the data dictionary in a data structure of a dictionary object; and the primary key ID is a dictionary character string obtained by performing dictionary mapping on the primary key included in the data record.

Further, the dictionary character string is a numeric character string.

Further, the method further includes: obtaining a new data record; retrieving the data dictionary to determine whether a key-value pair corresponding to a primary key of the new data record exists; and if existent, updating a timestamp in a value of the key-value pair to update a latest use moment of the key-value pair to a current moment.

Further, the database includes a distributed graph database; and the primary key is a primary key of attribute data included in a node and an edge in graph data stored in the graph database.

According to a second aspect of one or more embodiments of this specification, a maintenance apparatus for a data dictionary is proposed, including: a recording module, configured to obtain maintenance duration of a key-value pair; a comparison module, configured to determine whether the maintenance duration reaches a predetermined duration threshold; and an elimination module, configured to: if yes, delete the key-value pair, and write a primary key ID into a list of IDs to be allocated.

According to a third aspect of one or more embodiments of this specification, an electronic device is proposed, including: a processor; and a memory, configured to store instructions executable by the processor; where the processor implements the method according to the first aspect by running the executable instructions.

According to a fourth aspect of one or more implementations of this specification, a computer-readable storage medium is provided, where computer instructions are stored on the computer-readable storage medium, and the instructions are executed by a processor to implement the steps of the method according to the first aspect.

Based on the above-mentioned embodiments, whether maintenance duration of a key-value pair maintained in a data dictionary reaches a predetermined duration threshold is checked, a key-value pair that reaches or exceeds the duration threshold is eliminated, and a primary key ID in the eliminated key-value pair is recovered, so an unnecessary key-value pair can be eliminated in a timely manner, maintenance costs of the key-value pair are reduced, and an eliminated primary key ID can be reused. Therefore, a continuous increase of the primary key ID is avoided, and a possibility of system crash is reduced.

### BRIEF DESCRIPTION OF DRAWINGS

FIG. 1 is a schematic architectural diagram illustrating a maintenance system for a data dictionary, according to an example embodiment.
FIG. 2 is a flowchart illustrating a maintenance method for a data dictionary, according to an example embodiment.
FIG. 3 is a schematic diagram illustrating a maintenance method for a data dictionary, according to an example embodiment.
FIG. 4 is a schematic diagram illustrating a maintenance method for a data dictionary, according to an example embodiment.
FIG. 5 is a schematic diagram illustrating a maintenance apparatus for a data dictionary, according to an example embodiment.
FIG. 6 is a schematic structural diagram illustrating a device, according to an example embodiment.

### DESCRIPTION OF EMBODIMENTS

Example embodiments are described in detail here, and examples of the example embodiments are presented in the accompanying drawings. When the following description relates to the accompanying drawings, unless specified otherwise, the same numbers in different accompanying drawings represent the same or similar elements. Implementations described in the following example embodiments do not represent all implementations consistent with one or more embodiments of this specification. On the contrary, the implementations are merely examples of apparatuses and methods that are described in the appended claims in detail and consistent with some aspects of one or more embodiments of this specification.

It is worthwhile to note that the steps of the corresponding method are not necessarily performed in the sequence shown and described in this specification in other embodiments. In some other embodiments, the method can include more or less steps than those described in this specification. In addition, a single step described in this specification may be broken down into multiple steps in other embodiments for description. However, the multiple steps described in this specification may also be combined into a single step for description in other embodiments.

When data are stored in a database, a key-value pair that includes a primary key (PK) of a data record and a corresponding primary key ID can be maintained in a data dictionary corresponding to the database. For a data record to be stored, a long primary key in the data record can be converted into a primary key identifier (ID) based on the key-value pair maintained in the data dictionary, so as to reduce storage or provide faster search. As data records increase, a quantity of primary key IDs of key-value pairs maintained in the data dictionary increases constantly, and consequently, system crash is easily caused.

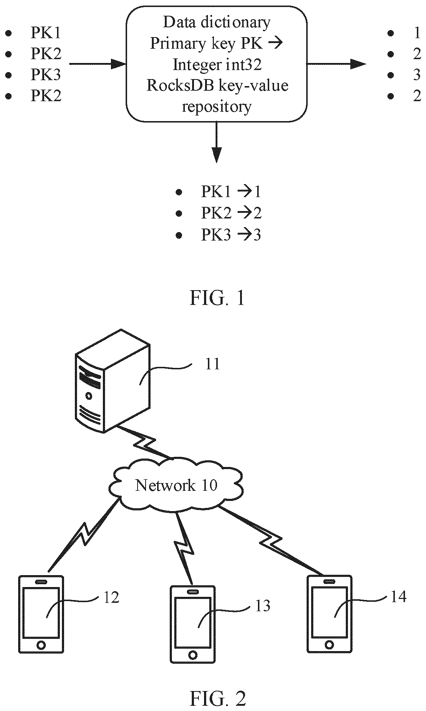

For example, as shown in FIG. 1, a data dictionary corresponding to a database can maintain a key-value pair (KV) corresponding to each primary key PK, where a primary key ID corresponding to the primary key PK can use an integer int32 data type, and the key-value pair can include PK1→1, PK2→2, PK3→3, .... For example, the RocksDB key-value repository is used. No matter how long the primary key PK in the data record originally is, it will be converted into an int32 primary key ID, and actual storage and computation will use int32 to replace the original primary key PK. Primary keys PKs of four pieces of data to be stored are respectively PK1, PK2, PK3, and PK2. Based on the key-value pair maintained in the data dictionary, PK1 can be converted into 1, PK2 can be converted into 2, and PK3 can be converted into 3. Primary keys PKs of data records stored in the database are replaced with primary key IDs of 1, 2, 3, and 2. If the data record needs to be output from the database to a user, the primary key ID in the data record needs to be converted back to the corresponding primary key PK by using the key-value pair. When a data record with a new primary key PK is obtained, a key-value pair corresponding to the new primary key PK needs to be inserted into the data dictionary, and the key-value pair includes a new primary key ID, thereby increasing a value of the primary key ID. As a quantity of data records with a new primary key PK continues to increase, corresponding primary key IDs increase, which eventually causes the system to crash due to unendurability.

In view of this, this specification provides a maintenance method for a data dictionary. By detecting survival duration of a stored key-value pair, when it is determined that the survival duration of the key-value pair reaches a predetermined duration threshold, the key-value pair is deleted, and a primary key ID of the deleted key-value pair is recovered.

In implementation, maintenance duration of the key-value pair is obtained; whether the maintenance duration reaches a predetermined duration threshold is determined; and if yes, the key-value pair is deleted, and the primary key ID is written into a list of IDs to be allocated.

In the above-mentioned technical solution, survival duration of a stored key-value pair is detected, a key-value pair that is not used for a long time is eliminated, and a primary key ID is recovered, so the primary key ID can be reused, thereby avoiding a continuous increase of a value of the primary key ID, and reducing a possibility of system crash.

Referring to FIG. 2, FIG. 2 is a schematic architectural diagram illustrating a maintenance system for a data dictionary, according to an example embodiment. As shown in FIG. 2, the system can include a network 10, a server 11, and several electronic devices, such as a terminal device 12, a terminal device 13, and a terminal device 14.

The server 11 can be a physical server that includes an independent host, or the server 11 can be a virtual server, a cloud server, etc. that is carried in a host cluster. The terminal device 12 to the terminal device 14 are only a type of electronic devices that can be used by a user. Actually, the user can further use, for example, the following types of electronic devices: a mobile phone, a tablet device, a notebook computer, a personal digital assistant (PDA), and a wearable device (such as smart glasses or a smart watch), which is not limited in one or more embodiments of this specification. The network 10 can include multiple types of wired or wireless networks.

In an embodiment, the server 11 can cooperate with the terminal device 12 to the terminal device 14. The terminal device 12 to the terminal device 14 can collect data and upload collected data to the server 11 by using the network 10, and then the server 11 performs dictionary processing on the data and processes the data by using the maintenance method for a data dictionary in this specification, so as to store the data.

To make a person skilled in the art understand the technical solutions in this application better, the following clearly and comprehensively describes the technical solutions in some embodiments of this application with reference to the accompanying drawings in this specification.

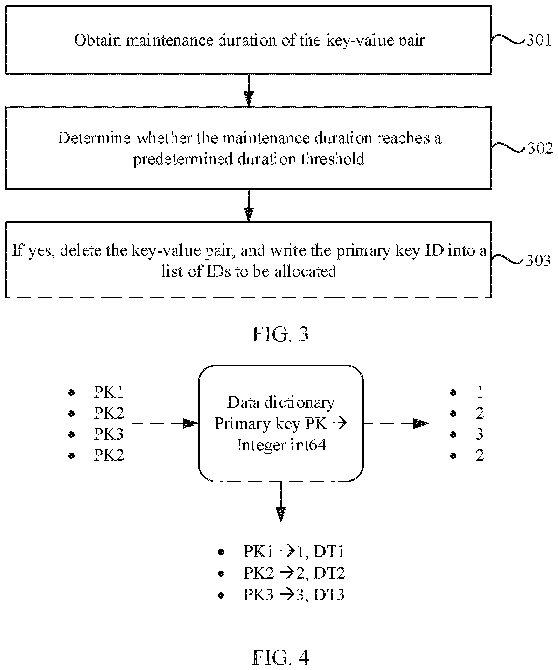

Referring to FIG. 3, FIG. 3 shows a maintenance method for a data dictionary, according to an example embodiment.

The data dictionary maintains a key-value pair, which can be represented as key→value, corresponding to a primary key included in a data record stored in a database; and a key of the key-value pair includes the primary key PK included in the data record, and a value of the key-value pair includes a primary key ID obtained by mapping the primary key PK included in the data record.

The primary key PK is a column or set of columns used to uniquely identify each data record, and a value of the primary key PK needs to be unique and cannot be empty. For example, a user identity number included in each data record in a data table can be used as a primary key PK of the data record. Or a combination of a user identity number and a user name included in each data record can be used as a primary key PK of the data record.

A size of the primary key PK can be set according to actual needs. For example, some primary key PK can reach more than KB. The primary key ID can be in a form of a relatively small character string, for example, including a letter, a number, and a symbol. For example, in an implementation, the primary key ID can be a numeric character string, such as int32 or int64.

The method includes the following steps.

S301. Obtain maintenance duration of the key-value pair.

The maintenance duration of the key-value pair maintained in the data dictionary is obtained periodically or in real time. The maintenance duration can be duration experienced after the key-value pair is created, or can be duration experienced after the key-value pair is recently updated, or can be duration experienced after conversion between the primary key PK and the primary key ID is recently performed by using the key-value pair.

S302. Determine whether the maintenance duration reaches a predetermined duration threshold.

S303. If yes, delete the key-value pair, and write the primary key ID into a list of IDs to be allocated.

The obtained maintenance duration of the key-value pair is compared with the predetermined duration threshold, to determine whether the maintenance duration is greater than or equal to the duration threshold. If the maintenance duration is less than the duration threshold, it indicates that the key-value pair does not need to be eliminated. If the maintenance duration is greater than or equal to the duration threshold, it indicates that the key-value pair needs to be eliminated, the key-value pair is deleted from the data dictionary, and a primary key ID in a value of the key-value pair is written into the list of IDs to be allocated.

The duration threshold can be set according to actual needs, and the same duration threshold can be set for all key-value pairs in the data dictionary, or multiple duration thresholds are set. For example, different duration thresholds can be determined according to priorities of the data records, and a duration threshold corresponding to a higher priority is longer.

After the primary key ID is written to the list of IDs to be allocated, the primary key ID in the list of IDs to be allocated is to be preferentially used. If a new data record is received and a key-value pair corresponding to a primary key PK in the new data record is not found in the data dictionary, it can be preferentially checked whether a primary key ID exists in the list of IDs to be allocated. If a primary key ID exists in the list of IDs to be allocated, one primary key ID can be selected from the list of IDs to be allocated as a primary key ID corresponding to the primary key PK in the new data record, and a new key-value pair is created in the data dictionary. If no primary key ID exists in the list of IDs to be allocated, a new primary key ID needs to be used as the primary key ID corresponding to the primary key PK in the new data record, for example, the largest primary key ID+1 in the current data dictionary is used as the new primary key ID.

For example, in an implementation, the maintenance duration of the key-value pair maintained by the data dictionary can be traversed at a fixed moment of each day, for example, 0 o'clock or any other moment of each day, so as to eliminate a key-value pair whose maintenance duration reaches or exceeds the duration threshold, and recover a primary key ID in the eliminated key-value pair for subsequent use.

The list of IDs to be allocated can be represented in various forms, for example, each primary key ID that can be allocated can be recorded, or a form of a bitmap can be used to indicate whether each primary key ID can be allocated.

For example, in an implementation, the list of IDs to be allocated is a bitmap, and each bit in the bitmap corresponds to one primary key ID. If an assigned value is 1, it indicates that the ID to be allocated can be allocated, or if the assigned value is 0, it indicates that the ID to be allocated is already allocated. When it is determined that the maintenance duration of the key-value pair maintained in the data dictionary reaches or exceeds the duration threshold, the key-value pair can be deleted from the data dictionary, and an assigned value of a bit, in the bitmap, corresponding to a primary key ID of the key-value pair is changed from 0 to 1.

Based on the above-mentioned embodiments, whether maintenance duration of a key-value pair maintained in a data dictionary reaches a predetermined duration threshold is checked, a key-value pair that reaches or exceeds the duration threshold is eliminated, and a primary key ID in the eliminated key-value pair is recovered, so an unnecessary key-value pair can be eliminated in a timely manner, maintenance costs of the key-value pair are reduced, and an eliminated primary key ID can be reused. Therefore, a continuous increase of the primary key ID is avoided, and a possibility of system crash is reduced.

There can be various manners of obtaining the maintenance duration of the maintained key-value pair in manners of determining whether the duration threshold is exceeded. For example, a timer of the key-value pair can be maintained in the data dictionary, and a value of the timer is used as the maintenance duration of the key-value pair. Or a timestamp of the key-value pair is maintained in the data dictionary as a latest maintenance moment. Or a usage record of the key-value pair is recovered in the data dictionary, and a latest maintenance moment is determined based on the usage record.

The latest maintenance moment can be a creation moment of the key-value pair, a moment at which the key-value pair is used to convert the primary key PK in the data record into a primary key ID for storage, a moment at which the key-value pair is used to convert the primary key ID in the stored data record into a primary key PK for output to the user, etc.

In an implementation, the value of the key-value pair further includes a timestamp used to indicate a latest use moment of the key-value pair, where the latest use moment can refer to a moment at which the key-value pair is created or can refer to a moment at which conversion between the primary key PK and the primary key ID is performed by using the key-value pair.

In an implementation, the value can be used to indicate a primary key ID and a timestamp, and the value can be a value obtained after encoding a primary key ID and a timestamp corresponding to the primary key PK. The coding scheme can be set according to actual needs, and coding can be performed by using a hash code, a key, etc.

In an implementation, the value can be a value obtained by concatenating the primary key ID and the timestamp, for example, a data type of the value can be int64, where the first 32 bits are the primary key ID and the last 32 bits are the timestamp.

In an implementation, a new data record is received; and the data dictionary is retrieved to determine whether a key-value pair corresponding to a primary key of the new data record exists; if the key-value pair corresponding to the primary key PK of the new data record does not exist in the data dictionary, a primary key ID is selected from the list of IDs to be allocated as a primary key ID corresponding to the primary key PK of the new data record, and a timestamp corresponding to the primary key PK is determined, so as to create a key-value pair corresponding to the primary key PK of the new data record in the data dictionary, where a key of the key-value pair is the primary key PK of the new data record, and a value of the key-value pair is a value obtained by concatenating the primary key ID and the timestamp; and the primary key PK in the data record is mapped to a primary key ID in a corresponding key-value pair, and the primary key ID is stored; and if a key-value pair corresponding to the primary key PK of the new data record exists in the data dictionary, a timestamp in the value of the key-value pair is updated based on a current moment, so as to update a latest use moment of the key-value pair to the current moment; and the primary key PK in the data record is mapped to a primary key ID in a corresponding key-value pair, and the primary key ID is stored.

When the timestamp in the value of the key-value pair is updated based on the current moment, the current moment can be first compared with a moment indicated by the timestamp. If a time difference between the current moment and the time indicated by the timestamp exceeds a predetermined time interval, the timestamp in the value of the key-value pair is updated. Otherwise, the timestamp in the value of the key-value pair does not need to be updated.

The predetermined time interval can be set according to actual needs, for example, can be set based on precision of the moment indicated by the timestamp, for example, day, hour, and minute.

For example, in an implementation, if the precision of the timestamp is day, when a data record to be stored is obtained and it is determined that a key-value pair corresponding to a primary key PK of the data record exists in the data dictionary, a date of a current moment can be compared with a date indicated by a timestamp in a value of the key-value pair. If same, the value of the key-value pair is not to be updated. If different, the timestamp in the value of the key-value pair is updated based on the date of the current moment.

For example, a latest maintenance moment of each key-value pair indicated by a timestamp included in a value of the key-value pair maintained in the data dictionary can be traversed every day, whether the latest maintenance moment of the key-value pair expires is determined based on a predetermined duration threshold, if expired, the key-value pair is eliminated, and a primary key ID in the value of the key-value pair is written into the list of IDs to be allocated.

Based on the above-mentioned embodiment, a timestamp used to indicate a latest use moment of a key-value pair is recorded in a value of the key-value pair, so it is convenient to detect, based on the timestamp, whether the key-value pair expires. If expired, the key-value pair is eliminated, and an eliminated primary key ID is written into the list of IDs to be allocated, so the eliminated primary key ID can be reused, avoiding a continuous increase of the primary key ID and reducing a possibility of system crash.

In an implementation, the key-value pair can be stored in the data dictionary in a data structure of a dictionary object. The primary key ID is a dictionary character string obtained by performing dictionary mapping on a primary key included in the data record, and the dictionary character string can include a letter, a number, a symbol, etc. For example, in an implementation, the primary key ID can be a numeric character string, such as int32 or int64. For ease of description, the following embodiments use int32 or int64 as an example for description.

When data are stored in a database, dictionary mapping can be used to convert a long primary key PK in a data record into a primary key ID by using a key-value pair corresponding to the primary key PK and maintained by a predetermined data dictionary, and then the primary key ID is stored into the database, so as to reduce storage or provide faster search. If the data record needs to be output from the database to a user, the primary key ID in the data record needs to be converted back to the corresponding primary key PK by using the data dictionary. A key-value pair corresponding to each primary key PK and stored in a data structure of a dictionary object can be maintained in the data dictionary, a key of the key-value pair includes the primary key PK included in the data record, a value of the key-value pair includes a primary key ID obtained by performing dictionary mapping on the primary key included in the data record, and the primary key ID can be a numeric character string, such as int32 or int64.

When a new data record is obtained, the data dictionary can be retrieved to determine whether a key-value pair corresponding to a primary key PK of the new data record exists. If not existent, an unallocated primary key ID can be selected from the list of IDs to be allocated as a primary key ID corresponding to the primary key PK of the new data record, and a timestamp corresponding to the primary key PK is determined based on a current moment, so as to create a key-value pair corresponding to the primary key PK of the new data record in the data dictionary, where a key of the key-value pair is the primary key PK of the new data record, and a value of the key-value pair is a value obtained by concatenating the primary key ID and the timestamp; and if a key-value pair corresponding to the primary key PK of the new data record exists in the data dictionary, a timestamp in the value of the key-value pair is updated based on a current moment, so as to update a latest use moment of the key-value pair to the current moment.

As shown in FIG. 4, four data records to be stored are successively obtained, and primary keys thereof are respectively PK1, PK2, PK3, and PK2. In the data dictionary, whether key-value pairs corresponding to PK1, PK2, and PK3 exist can be retrieved. If no key-value pairs corresponding to PK1, PK2, and PK3 exist in the data dictionary, it can be respectively determined from the list of IDs to be allocated that a primary key ID corresponding to PK1 is 1, a primary key ID corresponding to PK2 is 2, and a primary key ID corresponding to PK3 is 3, and it is determined that a timestamp corresponding to PK1 is DT1, a timestamp corresponding to PK2 is DT2, and a timestamp corresponding to PK3 is DT3. Key-value pairs corresponding to PK1, PK2, and PK3 are respectively established in the data dictionary, which are respectively PK1→1, DT1, PK2→2, DT2, and PK3→3, DT3. A data type of the value in the key-value pair is int64, and is formed by concatenating a 32-bit primary key ID and a 32-bit timestamp. No matter how long the primary key PK in the data record originally is, it will be converted into an int32 primary key ID, and actual storage and computation will use int32 to replace the original primary key PK. That is, dictionary mapping is respectively performed on PK1, PK2, and PK3 to obtain corresponding primary key IDs based on the data dictionary. Dictionary mapping is performed on PK1 to be 1, dictionary mapping is performed on PK2 to be 2, and dictionary mapping is performed on PK3 to be 3. When another data record whose primary key is PK2 is received, a date of a current moment can be compared with a date represented by the timestamp DT2 corresponding to PK2. If the date of the current moment is different from the date represented by the timestamp DT2 corresponding to PK2, DT2 is updated, and the updated DT2 is the date of the current moment.

A timestamp in a value of each key-value pair maintained in the data dictionary can be traversed periodically or in real time, so as to determine, based on the predetermined duration threshold, whether the key-value pair expires; if the key-value pair expires, an expired key value is eliminated, and an eliminated primary key ID is written into the list of IDs to be allocated. For example, the predetermined duration threshold is 7 days. A date represented by a timestamp in a value of each key-value pair maintained in the data dictionary can be traversed at 0 o'clock each day. If dates represented by DT1 and DT3 corresponding to PK1 and PK3 are earlier than 7 days, and the date represented by DT2 corresponding to PK2 is still within 7 days, it is determined that the key-value pairs corresponding to PK1 and PK3 are expired, the key-value pairs corresponding to PK1 and PK3 are deleted from the data dictionary, and corresponding primary key IDs 1 and 3 are written into the list of IDs to be allocated.

Based on the above-mentioned embodiment, it is checked whether duration of a key-value pair maintained in the data dictionary reaches the predetermined duration threshold, a key-value pair that reaches or exceeds the duration threshold is eliminated, and a primary key ID in the eliminated key-value pair is recovered. Therefore, a key-value pair that is not used for a long time in the data dictionary can be eliminated, and the eliminated primary key ID is reused, so a continuous increase of the primary key ID is avoided, a rate of increasing a data volume in the data dictionary is reduced, and system crash caused by exceeding an endurability of the data dictionary is prevented.

In an implementation, the database can include a distributed graph database; and graph data stored in the graph database can include attribute data of a node and attribute data of an edge. A column or a set of columns in the attribute data of the node and the edge can be used as a primary key PK.

To prevent a conflict between a stored data record and a key-value pair in the data dictionary, in an implementation, after it is determined that maintenance duration of the key-value pair reaches or exceeds the duration threshold, it can be queried whether a data record corresponding to a primary key ID of the key-value pair exists in the stored data record. If no data record corresponding to the primary key ID of the key-value pair exists, the key-value pair is eliminated from the data dictionary, and the primary key ID of the key-value pair is written into the list of IDs to be allocated. If a data record corresponding to the primary key ID of the key-value pair exists, the stored data record can be deleted, the key-value pair is eliminated from the data dictionary, and the primary key ID of the key-value pair is written into the list of IDs to be allocated. Or if a data record corresponding to the primary key ID of the key-value pair exists, the data record can be marked, the key-value pair is eliminated from the data dictionary, and the primary key ID of the key-value pair is written into the list of IDs to be allocated, where the mark can be used to indicate that no key-value pair corresponding to the data record exists in the data dictionary. Or if a data record corresponding to the primary key ID of the key-value pair exists, the key-value pair may not be eliminated from the data dictionary, and a timestamp of the key-value pair is updated. Or if a data record corresponding to the primary key ID of the key-value pair exists, the key-value pair is marked to wait for next traversal of the timestamp and then determining is performed.

In an implementation, after it is determined that maintenance duration of a key-value pair reaches or exceeds the duration threshold, the key-value pair is eliminated, whether a data record corresponding to a primary key ID of the key-value pair exists in the stored data record can be queried. If no data record corresponding to the primary key ID of the key-value pair exists, the primary key ID is written into the list of IDs to be allocated; or if a data record corresponding to the primary key ID of the key-value pair exists, the stored data record can be deleted, and the primary key ID is written into the list of IDs to be allocated. Or if a data record corresponding to the primary key ID of the key-value pair exists, the primary key ID is written into the list of IDs to be allocated, and the primary key ID is marked, where the mark can be an undeleted mark. Or if a data record corresponding to the primary key ID of the key-value pair exists, the data record is marked, where the mark can be used to indicate that no key-value pair corresponding to the data record exists in the data dictionary. Or if a data record corresponding to the primary key ID of the key-value pair exists, the key-value pair is recovered in the data dictionary, and the timestamp of the key-value pair is updated.

In an implementation, after it is determined that maintenance duration of a key-value pair reaches or exceeds the duration threshold, the key-value pair is eliminated, a primary key ID of the key-value pair is written into the list of IDs to be allocated, and whether a data record corresponding to the primary key ID of the key-value pair exists in a stored data record can be queried. If a data record corresponding to the primary key ID of the key-value pair exists, the existing data record can be deleted. Or if a data record corresponding to the primary key ID of the key-value pair exists, the primary key ID is marked in the list of IDs to be allocated. Or if a data record corresponding to the primary key ID of the key-value pair exists, the primary key ID is deleted from the list of IDs to be allocated. Further, the key-value pair can be recovered in the data dictionary.

In an implementation, if a stored data record is deleted, whether a key-value pair corresponding to a primary key ID of the deleted data record exists can be queried in the data dictionary. If existent, the key-value pair can be eliminated, and the primary key ID is recorded in the list of IDs to be allocated.

In an implementation, a timestamp corresponding to the primary key ID can be added to the stored data record. The timestamp is used to indicate a latest maintenance moment of the data record, for example, can be a storage moment of the data record, an update moment of the data record, or a read moment of the data record.

When the data record is read from the stored data record, a timestamp corresponding to the primary key ID and in the data record can be read, and whether a key-value pair corresponding to the primary key ID exists in the data dictionary is queried. If a key-value pair corresponding to the primary key ID exists in the data dictionary, a time difference between a moment indicated by a timestamp in the key-value pair and a moment indicated by a timestamp corresponding to the primary key ID and in the data record is obtained. If the time difference is greater than or equal to the predetermined duration threshold, it can be considered that a key-value pair corresponding to the primary key ID and in the data dictionary is not a key-value pair corresponding to the data record, that is, it can be considered that a key-value pair corresponding to the data record and in the data dictionary is already eliminated. In this case, the stored data record can be deleted, and the user can be further indicated that the stored data record is invalid.

In an implementation, when a key-value pair maintained by the data dictionary is used to perform dictionary mapping on a primary key PK included in a data record, a primary key ID and a timestamp in a value of the key-value pair can be used as a whole to perform dictionary mapping with the primary key PK. When a new data record is received, the data dictionary can be retrieved to determine whether a key-value pair corresponding to a primary key PK of the new data record exists. If no key-value pair corresponding to the primary key PK of the new data record exists, a primary key ID is selected from the list of IDs to be allocated as a primary key ID corresponding to the primary key PK of the new data record, and a timestamp corresponding to the primary key PK is determined, so as to create, in the data dictionary, a key-value pair corresponding to the primary key PK of the new data record, where a key of the key-value pair is the primary key PK of the new data record, and a value of the key-value pair is a value obtained by concatenating the primary key ID and the timestamp. The primary key PK in the data record is mapped into the value in the corresponding key-value pair, that is, mapped into the value obtained by concatenating the primary key ID and the timestamp, and the value is stored.
If a key-value pair corresponding to the primary key PK of the new data record exists in the data dictionary, the timestamp in the value of the key-value pair is updated based on a current moment, so as to update a latest use moment of the key-value pair to the current moment; and the primary key PK of the data record is mapped into an updated value, that is, mapped into the value obtained by concatenating the primary key ID and the updated timestamp, and the value is stored.
When the data record is read from the stored data record, the primary key ID and the timestamp can be read from the data record, and whether a key-value pair corresponding to the primary key ID and the timestamp exists in the data dictionary is queried. If the key-value pair corresponding to the primary key ID and the timestamp exists in the data dictionary, the primary key ID and the timestamp in the data record are mapped back to the primary key PK by using the data dictionary, and are returned to the user. If the key-value pair corresponding to the primary key ID and the timestamp does not exist in the data dictionary, it can be considered that the key-value pair corresponding to the data record in the data dictionary is already eliminated. In this case, the stored data record can be deleted, and the user can be further indicated that the stored data record is invalid.

Corresponding to the above-mentioned embodiment of the maintenance method for a data dictionary, this application further provides an embodiment of a maintenance apparatus for a data dictionary.

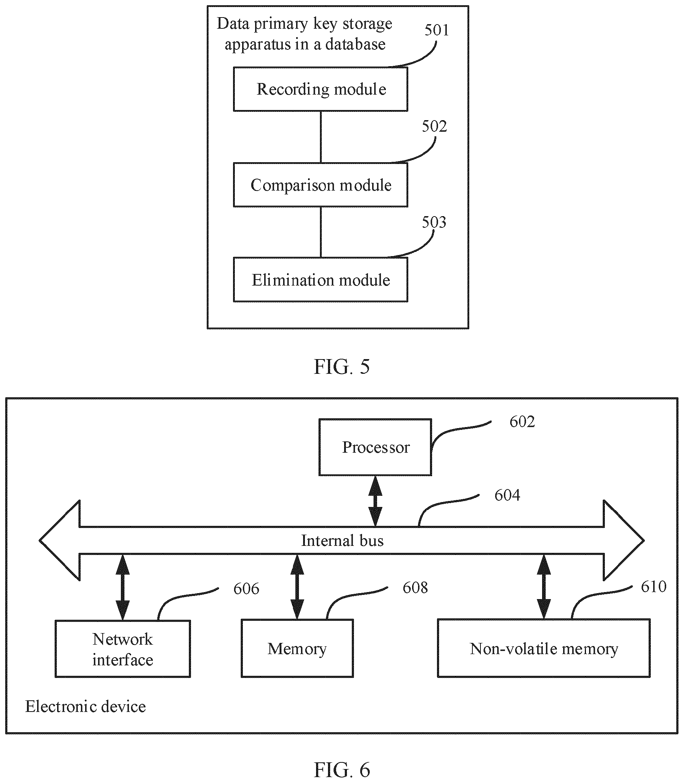

As shown in FIG. 5, the maintenance apparatus for a data dictionary includes a recording module 501, a comparison module 502, and an elimination module 503.

The recording module 501 obtains maintenance duration of a key-value pair. The comparison module 502 determines whether the maintenance duration reaches a predetermined duration threshold. The elimination module 503 is configured to: if yes, delete the key-value pair, and write a primary key ID into a list of IDs to be allocated.

Further, the value of the key-value pair further includes a timestamp used to indicate a latest use moment of the key-value pair; and the recording module 501 is configured to determine the maintenance duration of the key-value pair based on a difference between the latest use moment and a current moment.

Further, the value of the key-value pair is a value obtained by concatenating the primary key ID and the timestamp.

Further, the key-value pair is stored in the data dictionary in a data structure of a dictionary object; and the primary key ID is a dictionary character string obtained by performing dictionary mapping on the primary key included in the data record.

Further, the dictionary character string is a numeric character string.

Further, the recording module 501 is further configured to: obtain a new data record; retrieve the data dictionary to determine whether a key-value pair corresponding to a primary key of the new data record exists; and if existent, update a timestamp in a value of the key-value pair to update a latest use moment of the key-value pair to a current moment.

Further, the database includes a distributed graph database; and the primary key is a primary key of attribute data included in a node and an edge in graph data stored in the graph database.

Based on the above-mentioned embodiments, whether maintenance duration of a key-value pair maintained in a data dictionary reaches a predetermined duration threshold is checked, a key-value pair that reaches or exceeds the duration threshold is eliminated, and a primary key ID in the eliminated key-value pair is recovered, so an unnecessary key-value pair can be eliminated in a timely manner, maintenance costs of the key-value pair are reduced, and an eliminated primary key ID can be reused. Therefore, a continuous increase of the primary key ID is avoided, and a possibility of system crash is reduced.

FIG. 6 is a schematic structural diagram illustrating a device, according to an example embodiment. Referring to FIG. 6, in terms of hardware, the device includes a processor 602, an internal bus 604, a network interface 606, a memory 608, and a nonvolatile memory 610, and certainly may further include other needed hardware. One or more embodiments of this specification can be implemented in a software-based way, for example, the processor 602 reads a corresponding computer program from the non-volatile memory 610 to the memory 608, and then runs the computer program. Certainly, in addition to a software implementation, one or more embodiments of this specification do not exclude another implementation, for example, a logic device or a combination of hardware and software. That is, an execution body of the following processing procedure is not limited to each logical unit, and can also be hardware or a logic device.

The system, apparatus, module, or unit illustrated in the above-mentioned embodiments can be implemented by using a computer chip or an entity, or can be implemented by using a product having a certain function. A typical implementation device is a computer, and a specific form of the computer can be a personal computer, a laptop computer, a cellular phone, a camera phone, a smartphone, a personal digital assistant, a media player, a navigation device, an email receiving/sending device, a game console, a tablet computer, a wearable device, or a combination of any several of these devices.

In typical configuration, the computer includes one or more processors (CPU), an input/output interface, a network interface, and a memory.

The memory may include a non-persistent memory, a random access memory (RAM), and/or a non-volatile memory in a computer-readable medium, for example, a read-only memory (ROM) or a flash read-only memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data. Examples of a computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD) or another optical storage, a cassette tape, a magnetic disk storage, a quantum memory, a storage medium based on grapheme, another magnetic storage device, or any other non-transmission medium. The computer storage medium can be used to store information that can be accessed by a computing device. Based on the definition in this specification, the computer-readable medium does not include transitory computer-readable media (transitory media) such as a modulated data signal and carrier.

It is worthwhile to note that the user information (including but not limited to user equipment information, user personal information, etc.) and the data (including but not limited to data used for analysis, stored data, displayed data, etc.) used in this application are information and data that are authorized by users or that are fully authorized by all parties, and the related data need to be collected, used, and processed in compliance with relevant laws, regulations, and standards of relevant countries and regions, and corresponding operation entries are provided for users to choose to authorize or reject.

It is worthwhile to note that the terms "include", "contain", or any other variant thereof are intended to cover a non-exclusive inclusion, so a process, a method, a product, or a device that includes a list of elements not only includes those elements but also includes other elements which are not expressly listed, or further includes elements inherent to such process, method, product, or device. In a case without more restrictions, for an element limited by the statement "include a...", a process, method, product, or device that includes the element can further include another same element.

Specific embodiments of this specification are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular execution order to achieve the desired results. In some implementations, multi-tasking and concurrent processing are feasible or may be advantageous.

Terms used in one or more embodiments of this specification are merely used to describe specific embodiments, and are not intended to limit the one or more embodiments of this specification. The terms "a" and "the" of singular forms used in one or more embodiments of this specification and the appended claims are also intended to include plural forms, unless otherwise specified in the context clearly. It should be further understood that the term "and/or" used in this specification indicates and includes any or all possible combinations of one or more associated listed items.

It should be understood that although terms "first", "second", "third", etc. may be used in one or more embodiments of this specification to describe various types of information, the information is not limited to these terms. These terms are merely used to differentiate between information of the same type. For example, without departing from the scope of one or more embodiments of this specification, first information can also be referred to as second information, and similarly, the second information can be referred to as the first information. Depending on the context, for example, the word "if" used here can be explained as "while", "when", or "in response to determining".

The above-mentioned descriptions are only example embodiments of one or more embodiments of this specification, but are not intended to limit the one or more embodiments of this specification. Any modification, equivalent replacement, improvement, etc. made without departing from the spirit and principle of the one or more embodiments of this specification shall fall within the protection scope of the one or more embodiments of this specification.

### EXAMPLES

1. A maintenance method for a data dictionary, wherein the data dictionary maintains a key-value pair corresponding to a primary key comprised in a data record stored in a database; and a key of the key-value pair comprises the primary key comprised in the data record, a value of the key-value pair comprises a primary key ID obtained by mapping the primary key comprised in the data record, and the method comprises:
   obtaining maintenance duration of the key-value pair;
   determining whether the maintenance duration reaches a predetermined duration threshold; and
   if yes, deleting the key-value pair, and writing the primary key ID into a list of IDs to be allocated.
2. The method according to example 1, wherein the value of the key-value pair further comprises a timestamp used to indicate a latest use moment of the key-value pair; and
   the obtaining maintenance duration of the key-value pair comprises:
   determining the maintenance duration of the key-value pair based on a difference between the latest use moment and a current moment.
3. The method according to example 2, wherein the value of the key-value pair is a value obtained by concatenating the primary key ID and the timestamp.
4. The method according to example 1, wherein the key-value pair is stored in the data dictionary in a data structure of a dictionary object; and the primary key ID is a dictionary character string obtained by performing dictionary mapping on the primary key comprised in the data record.
5. The method according to example 4, wherein the dictionary character string is a numeric character string.
6. The method according to example 1, wherein the method further comprises:
   obtaining a new data record;
   retrieving the data dictionary to determine whether a key-value pair corresponding to a primary key of the new data record exists; and
   if existent, updating a timestamp in a value of the key-value pair to update a latest use moment of the key-value pair to a current moment.
7. The method according to example 1, wherein the database comprises a distributed graph database; and the primary key is a primary key of attribute data comprised in a node and an edge in graph data stored in the graph database.
8. A maintenance apparatus for a data dictionary, comprising:
   a recording module, configured to obtain maintenance duration of a key-value pair;
   a comparison module, configured to determine whether the maintenance duration reaches a predetermined duration threshold; and
   an elimination module, configured to: if yes, delete the key-value pair, and write a primary key ID into a list of IDs to be allocated.
9. An electronic device, comprising:
   a processor; and
   a memory, configured to store instructions executable by the processor; wherein
   the processor runs the executable instructions to implement the method according to any one of examples 1 to 7.
10. A computer-readable storage medium on which computer instructions are stored, wherein steps of the method according to any one of examples 1 to 7 are implemented when the instructions are executed by a processor.

## Claims

1. A method for data dictionary maintenance, wherein the data dictionary maintains a key-value pair corresponding to a primary key comprised in a data record stored in a database, a key of the key-value pair comprises the primary key comprised in the data record, and a value of the key-value pair comprises a primary key identifier, ID, obtained by mapping the primary key comprised in the data record, wherein the method comprises:
obtaining (301) maintenance duration of the key-value pair;
determining (302) whether the maintenance duration reaches a predetermined duration threshold; and
if yes, deleting (303) the key-value pair, and writing the primary key ID into a list of IDs to be allocated.

2. The method according to claim 1, wherein the value of the key-value pair further comprises a timestamp used to indicate a latest use moment of the key-value pair; and
obtaining (301) the maintenance duration of the key-value pair comprises:
determining the maintenance duration of the key-value pair based on a difference between the latest use moment and a current moment.

3. The method according to claim 2, wherein the value of the key-value pair is a value obtained by concatenating the primary key ID and the timestamp.

4. The method according to claim 1, wherein the key-value pair is stored in the data dictionary in a data structure of a dictionary object; and the primary key ID is a dictionary character string obtained by performing dictionary mapping on the primary key comprised in the data record.

5. The method according to claim 4, wherein the dictionary character string is a numeric character string.

6. The method according to claim 1, wherein the method further comprises:
obtaining a new data record;
retrieving the data dictionary to determine whether a key-value pair corresponding to a primary key of the new data record exists; and
if existent, updating a timestamp in a value of the key-value pair to update a latest use moment of the key-value pair to a current moment.

7. The method according to claim 1, wherein the database comprises a distributed graph database; and the primary key is a primary key of attribute data comprised in a node and an edge in graph data stored in the graph database.

8. An apparatus for a data dictionary maintenance, comprising:
a recording module (501), configured to obtain (301) maintenance duration of a key-value pair;
a comparison module (502), configured to determine (302) whether the maintenance duration reaches a predetermined duration threshold; and
an elimination module (503), configured to, if yes, delete (303) the key-value pair, and write a primary key identifier, ID, into a list of IDs to be allocated.

9. An electronic device, comprising:
a processor (602); and
a memory (608), configured to store instructions executable by the processor; wherein
the processor runs the executable instructions to implement the method according to any one of claims 1 to 7.

10. A computer-readable storage medium on which computer instructions are stored, wherein steps of the method according to any one of claims 1 to 7 are implemented when the instructions are executed by a processor (602).
